# EUROPÄISCHE PATENTANMELDUNG

(11) **EP 3 851 614 A1**
(43) Veröffentlichungstag der Anmeldung: **21.07.2021**
(21) Anmeldenummer: 20151721.6
(22) Anmeldetag: 14.01.2020
(51) Int. Cl.: E04G 17/06, E04G 23/02, F16B 33/00

(54) **VERSCHLUSSSTOPFEN ODER ANKER**

(71) Anmelder: Mastertec GmbH & Co. KG, 96173 Oberhaid (DE)
(72) Erfinder: KROPFELDER, Rainer, 96191 Viereth (DE); STÄBLEIN, Christopher, 96049 Bamberg (DE)
(74) Vertreter: Dr. Gassner & Partner mbB

(57) **Zusammenfassung**

Die Erfindung betrifft einen Verschlussstopfen (10) oder Anker zum wasserdichten Verschließen eines Durchbruchs oder einer Öffnung in einem Betonbauteil, umfassend eine elastische Hülse (12) mit einem ersten Hülsenende (18) und einem zweiten Hülsenende (19), einen sich durch die Hülse (12) hindurch erstreckenden Bolzen (14) mit einem Schraubgewinde (16) mit darauf aufgeschraubter Mutter (20) an seinem einen Ende und einem Bolzenkopf (22) oder einem weiteren Schraubgewinde mit darauf aufgeschraubter weiteren Mutter an seinem anderen Ende, wobei zwischen der Mutter (20) und der Hülse (12) oder zwischen dem Bolzenkopf (22) oder der weiteren Mutter und der Hülse (12) ein Sicherungsmittel (28) vorgesehen ist oder die Mutter (20) oder der Bolzenkopf (22) oder die weitere Mutter als Sicherungsmittel (28) ausgebildet ist. Weiterhin betrifft die Erfindung eine Verwendung des Verschlussstopfens und des Ankers sowie ein Verfahren zum wasserdichten Verschließen eines Durchbruchs oder einer Öffnung in einem Betonbauteil.

## Beschreibung

Die Erfindung betrifft einen Verschlussstopfen oder Anker zum wasserdichten Verschließen eines Durchbruchs oder einer Öffnung in einem Betonbauteil, die eine elastische Hülse mit zwei Enden und einen sich durch die Hülse hindurch erstreckenden Bolzen mit einem Schraubgewinde umfasst.

Ein derartiger Verschlussstopfen ist aus der WO 2008/094647 A1 bekannt. Um mit dem daraus bekannten Verschlussstopfen einen Durchbruch zu verschließen ist es erforderlich, die elastische Hülse mittels des Bolzens und einer auf das Schraubgewinde aufgesetzten Mutter zunächst so zu komprimieren, dass er beim Einsetzen in eine nicht konische Öffnung oder in eine Öffnung, deren Konizität so gestaltet ist, dass sich die Öffnung bzw. der Durchbruch von der Einsetzrichtung des Verschlussstopfens her aufweitet, zumindest so viel Halt in der Öffnung hat, dass eine Mutter auf dem Schraubgewinde angezogen werden kann, ohne dass der Verschlussstopfen sich dabei in der Öffnung dreht. Beim Einsetzen des Verschlussstopfens in eine konische Öffnung oder einen konischen Durchbruch, die bzw. der sich von der Einsetzrichtung des Verschlussstopfens her verjüngt, kann der Verschlussstopfen bei passender Größe soweit in die Öffnung oder den Durchbruch eingesetzt werden, dass er darin festklemmt. In diesem Fall ist es nicht erforderlich, den Verschlussstopfen vorzuspannen. Nach dem Einsetzen wird die Mutter dann soweit angezogen, bis die elastische Hülse dicht an der Wand anliegt. Nachteilig ist dabei, dass die Verschlussstopfen beim Einsetzen in eine nicht konische Öffnung oder eine Öffnung, deren Konizität derart ausgestaltet ist, dass sich diese von der Einsetzrichtung her aufweitet, jeweils vorgespannt werden müssen, um zumindest etwas Halt in der zu verschließenden Öffnung zu haben und dass der Grad der Vorspannung jeweils experimentell ermittelt werden muss. Weiterhin ist dabei nachteilig, dass zum Erreichen einer definierten Komprimierung der Hülse und damit einer definierten Abdichtung ein Anziehen der Mutter mit einem definierten Drehmoment erfolgen muss.

Aufgabe der vorliegenden Erfindung ist es, einen alternativen Verschlussstopfen oder einen Anker bereitzustellen, welcher eine einfachere Handhabung beim Verschließen eines Durchbruchs oder einer Öffnung ermöglicht. Weiterhin sollen eine Verwendung eines solchen Verschlussstopfens oder Ankers und ein Verfahren zum wasserdichten Verschließen eines Durchbruchs oder einer Öffnung in einem Betonbauteil angegeben werden.

Die Aufgabe wird durch die Merkmale der Patentansprüche 1, 11 und 12 gelöst. Zweckmäßige Ausgestaltungen ergeben sich aus den Merkmalen der Patentansprüche 2 bis 10 und 13.

Erfindungsgemäß ist ein Verschlussstopfen oder Anker zum wasserdichten Verschließen eines Durchbruchs oder einer Öffnung in einem Betonbauteil vorgesehen, der eine, insbesondere zylinderförmige, elastische Hülse mit einem ersten Hülsenende und einem zweiten Hülsenende, einen sich durch die Hülse hindurch erstreckenden Bolzen mit einem Schraubgewinde mit darauf aufgeschraubter Mutter an seinem einen Ende und einem Bolzenkopf oder einem weiteren Schraubgewinde mit darauf aufgeschraubter weiteren Mutter an seinem anderen Ende umfasst. Das Verschließen wird als ein wasserdichtes Verschließen erachtet, wenn der/die mit dem Verschlussstopfen oder Anker verschlossene Durchbruch oder Öffnung kein Wasser durchdringen oder eindringen lässt, wenn Wasser mit einem Druck von höchstens 20 Meter Wassersäule, insbesondere höchsten 15 Meter Wassersäule, insbesondere höchsten 10 Meter Wassersäule, insbesondere höchsten 8 Meter Wassersäule, insbesondere höchsten 5 Meter Wassersäule, insbesondere höchsten 3 Meter Wassersäule, insbesondere höchsten 2 Meter Wassersäule, insbesondere höchsten einem Meter Wassersäule, auf den/die mit dem Verschlussstopfen oder Anker verschlossene(n) Durchbruch oder Öffnung drückt.

Bei dem Bolzenkopf handelt es sich um einen Bereich des Bolzens, der gegenüber dem sonstigen Bolzen eine größere Querschnittsfläche bei einem jeweils senkrecht zur Längsachse des Bolzens geführten Querschnitt aufweist. Der Bolzenkopf kann wie ein üblicher Schraubenkopf ausgebildet sein und beispielsweise als Sechskant ausgebildet sein, oder einen Innensechskant zum Ansetzen eines Inbusschlüssels oder eine kreuzförmige oder schlitzförmige Ausnehmung zum Ansetzen eines Kreuzschraubendrehers oder eines Schlitzschraubendrehers aufweisen. Bei dem Durchbruch kann es sich um einen Durchbruch handeln, der in einer durch Gießen hergestellten Betonwand nach Entfernung der Schalungen und der die Schalungen zusammenhaltenden Spannanker in der Betonwand verbleibt. Ein solcher Durchbruch hat im Allgemeinen einen runden Querschnitt. Er kann jedoch auch eine andere, etwa eine quadratische Querschnittsform aufweisen. In jedem Fall hat die Hülse eine der Querschnittsform des Durchbruchs oder der Öffnung angepasste Form, d. h. bei einem Durchbruch oder einer Öffnung mit quadratischem Querschnitt weist auch die Hülse einen quadratischen Querschnitt auf. Dadurch kann die Hülse in den Durchbruch oder die Öffnung eingesetzt und durch Anziehen der aufgeschraubten Mutter so zusammengedrückt werden, dass sie dicht an der Wandung des Durchbruchs oder der Öffnung anliegt und einen Spalt zwischen Hülse und dieser Wandung wasserdicht verschließt. Weiterhin kann durch das Zusammendrücken der Hülse auch im Inneren der Hülse ein Spalt zwischen dem Bolzen und der Hülse abgedichtet werden. Um diese Abdichtung zu verbessern, kann in einer dem Bolzen zugewandten inneren Wandung der Hülse ein umlaufender Wulst ausgebildet sein, der an der Stelle des Wulstes den Spalt zwischen dem Bolzen und der Hülse verringert. Der Wulst kann eine Stärke von 0,1 mm bis 1 mm, insbesondere 0,2 mm bis 0,5 mm, aufweisen.

Bei dem elastischen Material, aus welchem die elastische Hülse besteht, kann es sich um ein thermoplastisches Elastomer handeln. Das elastische Material kann Neopren, Ethylen-Propylen-Dien-Kautschuk (EPDM), Polyvinylchlorid (PVC), Nitril oder Silikon sein oder zumindest als Bestandteil in einem Copolymer enthalten oder ein anderes dauerhaft elastisches Material sein.

Erfindungsgemäß ist zwischen der Mutter und der Hülse oder zwischen dem Bolzenkopf oder der weiteren Mutter und der Hülse ein Sicherungsmittel vorgesehen. Dabei weist das Sicherungsmittel eine Druckplatte und eine Druckplattendurchbruch, durch den sich der Bolzen erstreckt, auf und stützt sich über diese Druckplatte am ersten Hülsenende oder am zweiten Hülsenende auf. Alternativ kann auch die Mutter oder der Bolzenkopf oder die weitere Mutter als sich am ersten Hülsenende oder am zweiten Hülsenende aufstützendes Sicherungsmittel ausgebildet sein. Am jeweils anderen der ersten und zweiten Hülsenenden stützt sich der dort angeordnete Bolzenkopf oder die dort angeordnete Mutter oder die weitere Mutter direkt oder über eine zwischen diesem Bolzenkopf oder dieser Mutter oder dieser weiteren Mutter und der Hülse angeordnete Druckscheibe an diesem anderen der ersten und zweiten Hülsenenden auf. Um sich direkt am anderen der ersten und zweiten Hülsenenden aufstützen zu können, kann der Bolzenkopf oder die Mutter oder die weitere Mutter so ausgebildet sein, dass er/sie eine Fläche aufweist, mit der er/sie sich auf das andere der ersten und zweiten Hülsenenden aufstützt. Das Sicherungsmittel weist zumindest zwei federnd mit der Druckplatte verbundene Klemmmittel auf oder, wenn die Mutter oder der Bolzenkopf oder die weitere Mutter selbst als Sicherungsmittel ausgebildet ist, zumindest zwei federnd mit der Mutter, dem Bolzenkopf oder der weiteren Mutter verbundene Klemmmittel auf. Die Klemmmittel ragen über eine gedanklich in Richtung des Sicherungsmittels und über das Sicherungsmittel hinaus verlängerte Außenfläche, insbesondere über einen gedanklich in Richtung des Sicherungsmittels und über das Sicherungsmittel hinaus verlängerten Zylindermantel, der Hülse jeweils seitlich heraus. Die Klemmmittel ragen also über die Außenmaße der Hülse hinaus. Die federnde Verbindung der Klemmmittel mit der Druckplatte kann beispielsweise dadurch bereitgestellt werden, dass das gesamte Sicherungsmittel einstückig aus einem elastischen Kunststoff, insbesondere durch Spritzgießen, hergestellt ist und der Kunststoff am Übergang von der Druckplatte zu den Klemmmitteln jeweils eine gegenüber den umgebenden Bereichen verminderte Materialstärke aufweist. Bei dem Kunststoff kann es sich beispielsweise um Polyoxymethylen (POM), ein POM enthaltendes Copolymer, PA (Polyamid), PP (Polypropylen), PVC (Polyvinylchlorid) oder PC (Polycarbonat) handeln. Alternativ kann das Sicherungsmittel auch aus einem Metall, insbesondere einem federnden Metall, hergestellt sein.

Die Klemmmittel dienen dazu, das Sicherungsmittel in dem Durchbruch oder der Öffnung gegen ein Verdrehen gegenüber dem Betonbauteil zu sichern. Das zwischen der Mutter oder dem Bolzenkopf oder der weiteren Mutter und der Hülse angeordnete Sicherungsmittel ist gegenüber dieser Mutter oder diesem Bolzenkopf oder dieser weiteren Mutter gegen ein Verdrehen gesichert. Das Sicherungsmittel ist daher von seiner Größe und seiner Form so zu wählen, dass es sich mit seinen Klemmmitteln in dem Durchbruch oder der Öffnung so festklemmen kann, dass es sich beim Festziehen der Mutter oder des Bolzenkopfs oder der weiteren Mutter in dem Durchbruch oder der Öffnung nicht dreht, gleichzeitig aber noch in den Durchbruch oder die Öffnung hineingedrückt werden kann. Dadurch kann sich auch die Mutter oder der Bolzenkopf oder die weitere Mutter, welche/welcher gegenüber dem Sicherungsmittel gegen ein Verdrehen gesichert ist, beim Anziehen des Bolzenkopfes oder der Mutter oder der weiteren Mutter, der/die auf der anderen Seite der Hülse gelegen sind, nicht verdrehen. Ein Vorspannen der Hülse, um diese an den Innendurchmesser des Durchbruchs oder der Öffnung anzupassen, ist daher nicht erforderlich. Dies erleichtert und beschleunigt die Handhabung des Verschlussstopfens oder des Ankers bei dessen Montage.

Unter einem Anker wird hier ein in den Durchbruch oder die Öffnung einzusetzendes Haltemittel verstanden, an dem ein weiterer Gegenstand, etwa durch Verschrauben mit einem überstehenden Ende des weiteren Schraubgewindes oder mit einem in dem Bolzen enthaltenen Innengewinde, verankert werden kann.

Bei einer Ausgestaltung des erfindungsgemäßen Verschlussstopfens oder Ankers erstreckt/erstrecken sich das Schraubgewinde und/oder das weitere Schraubgewinde nur über eine vordefinierte Länge des Bolzens, so dass die Hülse bei bis zum Ende des Schraubgewindes eingeschraubter Mutter und/oder bis zum Ende des weiteren Schraubgewindes eingeschraubter weiteren Mutter um eine vordefinierte Strecke zusammengedrückt wird. Zum Einschrauben der Mutter bis zum Ende des Schraubgewindes und/oder der weiteren Mutter bis zum Ende des weiteren Schraubgewindes ist ein definiertes Drehmoment erforderlich, welches im Wesentlichen oder ausschließlich durch die Härte des Materials, aus dem die elastische Hülse besteht, und die Wandstärke der Hülse bestimmt wird. Das Einhalten dieses Drehmoments muss jedoch nicht mit einem speziellen Werkzeug sichergestellt werden, wenn es durch die vordefinierte Länge des Schraubgewindes und/oder des weiteren Schraubgewindes in Kombination mit den Materialeigenschaften der Hülse festgelegt wird. Auch dies vereinfacht und beschleunigt die Handhabung des erfindungsgemäßen Verschlussstopfens oder Ankers bei dessen Montage.

Das Sichern der Mutter oder des Bolzenkopfes oder die weitere Mutter gegenüber dem Sicherungsmittel gegen ein Verdrehen kann dadurch erfolgen, dass die Mutter oder der Bolzenkopf oder die weitere Mutter mit dem Sicherungsmittel verklebt ist oder dass in dem Sicherungsmittel eine Ausnehmung zur formschlüssigen oder passgenauen reibschlüssigen Aufnahme der Mutter oder des Bolzenkopfes oder die weitere Mutter vorgesehen ist. Beispielsweise kann dazu das Sicherungsmittel eine sechseckige Ausnehmung aufweisen, in welcher die Mutter oder die weitere Mutter eingesetzt ist. Eine passgenaue reibschlüssige Aufnahme ermöglicht auch bei einem runden Bolzenkopf ein Sichern gegen das Verdrehen, welches ausreicht, um die auf der anderen Seite der Hülse gelegene Mutter anziehen zu können. Zusätzlich zu dem Vorsehen der formschlüssigen oder passgenauen reibschlüssigen Aufnahme ist es möglich, dass die Mutter oder der Bolzenkopf oder die weitere Mutter in der Ausnehmung mit dem Sicherungsmittel verklebt ist.

Der Bolzen weist eine Längsachse auf. Die Klemmmittel können achssymmetrisch um die Längsachse des Bolzens angeordnet sein. Mindestens 3, insbesondere mindestens 4, insbesondere mindestens 5, insbesondere mindestens 6, insbesondere mindestens 7, insbesondere mindestens 8, insbesondere mindestens 9, insbesondere mindestens 10, der Klemmmittel können achssymmetrisch um die Längsachse des Bolzens angeordnet sein. Durch eine größere Zahl der Klemmmittel kann eine Zentrierung des Sicherungsmittels in dem Durchbruch oder der Öffnung besser sichergestellt werden.

Um auch ein Verdrehen der Hülse gegenüber dem Sicherungsmittel zu verhindern oder zumindest zu erschweren, wenn die Hülse und das Sicherungsmittel, beispielsweise bei der Montage des erfindungsgemäßen Verschlussstopfens oder Ankers und/oder beim Anziehen der Mutter oder des Bolzenkopfes oder der weiteren Mutter, aufeinandergedrückt werden, kann das Sicherungsmittel auf seiner der Hülse zugewandten Seite mindestens einen Vorsprung aufweisen. Dieser Vorsprung drückt dann in die elastische Hülse hinein und verhindert das Verdrehen der Hülse gegenüber dem Sicherungsmittel. Dadurch kann vermieden werden, dass die Hülse beim Anziehen der Mutter oder des Bolzenkopfes oder der weiteren Mutter durch Drehen an der Innenwandung des Durchbruchs oder der Öffnung aufgerieben wird. Durch ein solches Aufreiben können sich Teile von der Hülse lösen, welche zwischen der Hülse und der Wandung des Durchbruchs oder der Öffnung festgeklemmt werden und später eine Wasserdurchlässigkeit an dieser Stelle, zumindest bei hohem Wasserdruck, bewirken können.

Der Bolzenkopf kann, wenn er am anderen der ersten und zweiten Hülsenenden angeordnet ist, d.h. wenn er nicht selbst als Sicherungsmittel ausgebildet ist und nicht gegenüber dem Sicherungsmittel gegen ein Verdrehen gesichert ist und damit bei der Montage auf der Außenseite des Durchbruchs oder der Öffnung angeordnet ist, so ausgebildet sein, dass er mittels eines Schraubwerkzeugs verdreht werden kann. Beispielsweise kann er einen Außensechskant oder einen Innensechskant (Inbus®) oder einen Innensechsrund (Torx) aufweisen oder einfach nur eine schlitzförmige oder eine kreuzförmige Ausnehmung aufweisen, um mit einem Schlitzschraubendreher oder einem Kreuzschraubendreher angezogen zu werden. Auch dies erleichtert die Handhabung beim Einsetzen des Verschlussstopfens oder Ankers sehr. Beispielsweise können derartige Verschlussstopfen mittels eines Akkuschraubers und einem darauf aufgesetzten entsprechenden Schraubwerkzeug angezogen werden.

Der Bolzen kann auf seiner am anderen der ersten und zweiten Hülsenenden gelegenen Seite ein Innengewinde aufweisen. Das Innengewinde kann sich dabei durch den Bolzenkopf hindurch erstrecken. Das Innengewinde ist zur Aufnahme eines Schraubgewindes geeignet und ermöglicht es dadurch, etwas an dem Bolzen festzuschrauben und es dadurch zu verankern. In das Innengewinde kann aber auch ein Schraubgewinde einer Kappe zum Verblenden des Verschlussstopfens eingeschraubt werden.

Erfindungsgemäß ist weiterhin die Verwendung eines erfindungsgemäßen Verschlussstopfens oder Ankers zum wasserdichten Verschließen eines Durchbruchs oder einer Öffnung in einem Betonbauteil vorgesehen. Die Erfindung betrifft darüber hinaus ein Verfahren zum wasserdichten Verschließen eines Durchbruchs oder einer Öffnung in einem Betonbauteil mit folgenden Schritten:
a) Hineinschieben eines erfindungsgemäßen Verschlussstopfens oder Ankers in den Durchbruch oder die Öffnung, wobei das Hineinschieben mit dem Sicherungsmittel voran erfolgt und
b) Anziehen des Bolzenkopfes oder der Mutter oder der weiteren Mutter, welcher/welche auf der dem Sicherungsmittel gegenüberliegenden Seite der Hülse angeordnet ist, wobei die Hülse so weit zusammengedrückt wird, dass sie dicht an einer Wand des Durchbruchs oder der Öffnung anliegt.

Durch das Anziehen gemäß Schritt b) und das Zusammendrücken der Hülse wird im Allgemeinen auch bewirkt, dass die Hülse dicht am Bolzen anliegt. Ein Abdichten des Hülseninneren kann aber beispielsweise auch durch das Aufpressen der Druckplatte des Sicherungsmittels und/oder der Druckscheibe auf die Hülse in Kombination mit der auf die Druckplatte und/oder die Druckscheibe drückenden Mutter oder weiteren Mutter oder mit dem auf die Druckplatte und/oder die Druckscheibe drückenden Bolzenkopf, gegebenenfalls in Kombination mit einer zwischen der Druckplatte und/oder der Druckscheibe und der Mutter oder weitern Mutter oder dem Bolzenkopf angeordneten Dichtung, erfolgen.

Bei dem Verfahren und einem Verschlussstopfen oder Anker, bei dem sich das Schraubgewinde oder weitere Schraubgewinde nur über eine vordefinierte Länge des Bolzens erstreckt, so dass die Hülse bei bis zum Ende des Schraubgewindes eingeschraubter Mutter und/oder bis zum Ende des weiteren Schraubgewindes eingeschraubter weiteren Mutter um eine vordefinierte Strecke zusammengedrückt wird, kann der Bolzenkopf oder die weitere Mutter und/oder die weitere Mutter soweit angezogen werden, bis die Mutter das Ende des Schraubgewindes und/oder die weitere Mutter das Ende des weiteren Schraubgewindes erreicht. Dadurch wird die Hülse mit einer durch die Länge des Schraubgewindes und/oder weiteren Schraubgewindes festgelegten Kraft gegen die Innenwand des Durchbruchs oder der Öffnung gedrückt. Dadurch kann ein wasserdichter Verschluss des Durchbruchs oder der Öffnung in dem Betonbauteil sichergestellt werden. Die Kraft kann dabei umso größer und das Schraubgewinde und/oder das weitere Schraubgewinde umso länger sein, je höher der Wasserdruck ist, dem der Verschlussstopfen oder Anker standhalten muss. Wenn es sich bei dem Betonbauteil beispielsweise um eine Staumauer handelt, kann der Wasserdruck, dem der Verschlussstopfen in dem Durchbruch standhalten muss, sehr hoch sein.

Nachfolgend wird die Erfindung anhand eines Ausführungsbeispiels näher erläutert. Es zeigen:
- Fig. 1: einen Querschnitt durch einen erfindungsgemäßen Verschlussstopfen entlang der Längsachse,
- Fig. 2: eine Aufsicht auf den Verschlussstopfen von einer ersten Seite,
- Fig. 3: eine Aufsicht auf den Verschlussstopfen von einer gegenüberliegenden Seite ,
- Fig. 4: eine Aufsicht auf das Sicherungsmittel von einer Seite,
- Fig. 5: eine Aufsicht auf das Sicherungsmittel von einer gegenüberliegenden Seite und
- Fig. 6: eine Seitenansicht des Sicherungsmittels.

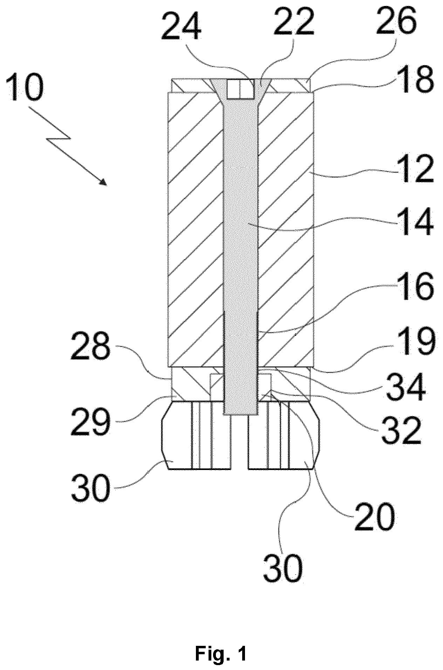

Fig. 1 zeigt den Verschlussstopfen 10 mit der Hülse 12 aus einem elastischen Material. Durch die Hülse 12 ist der Bolzen 14 geführt. Am ersten Hülsenende 18 weist der Bolzen 14 einen Bolzenkopf 22 mit einem Innensechskant 24 zum Ansetzen eines Schraubwerkzeugs, beispielsweise eines Inbusschlüssels, auf. An dem ersten Hülsenende 18 ist zwischen dem Bolzenkopf 22 und der Hülse 12 eine Druckscheibe 26 vorgesehen, welche eine konusförmige Vertiefung zur Aufnahme des konusförmig ausgebildeten Bolzenkopfs 22 aufweist, so dass der Bolzenkopf 22 nicht über die Druckscheibe 26 hinausragt und plan mit der Druckscheibe 26 abschließen kann. Die Druckscheibe 26 dient dazu, die vom Bolzenkopf 22 ausgeübte Kraft gleichmäßig auf die Hülse 12 zu übertragen.

Der Bolzen weist ein eine vordefinierte Länge aufweisendes Schraubgewinde 16 auf. An einem zweiten Hülsenende 19 ist auf das Schraubgewinde 16 eine Mutter 20 aufgeschraubt. Am zweiten Hülsenende 19 ist auch das Sicherungsmittel 28 mit den federnd an der Druckplatte 29 angeordneten Klemmmitteln 30 vorgesehen. Die Klemmmittel 30 ragen über die Außenmaße der Hülse 12 hinaus. Der Bolzen 14 ist durch den Druckplattendurchbruch 34 in der Druckplatte 29 hindurchgeführt. Zum Sichern der Mutter 20 gegen ein Verdrehen gegenüber dem Sicherungsmittel 28 ist in dem Sicherungsmittel 28 eine Ausnehmung 32 zur passgenauen formschlüssigen Aufnahme der Mutter 20 vorgesehen.

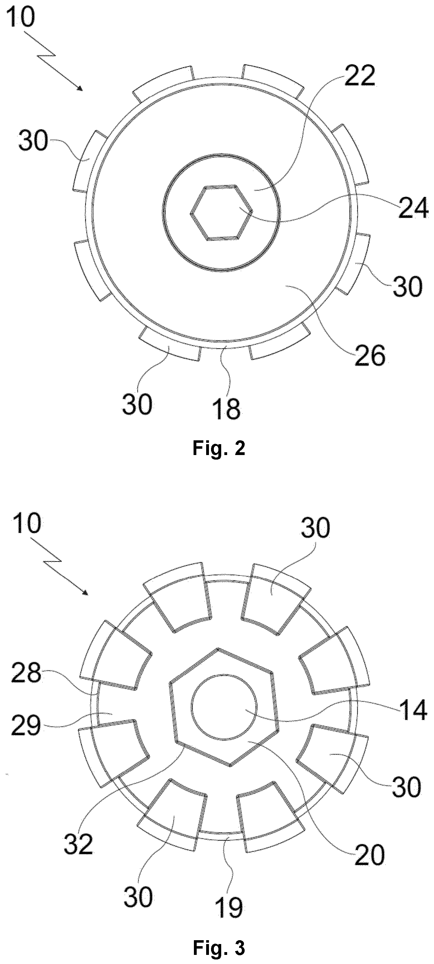

Fig. 2 zeigt eine Aufsicht auf den erfindungsgemäßen Verschlussstopfen 10 von der Seite des Bolzenkopfs 22 her mit dem im Bolzenkopf angeordneten Innensechskant 24.

Fig. 3 zeigt eine Aufsicht auf den Verschlussstopfen 10 von der Seite des Sicherungsmittels 28 her.

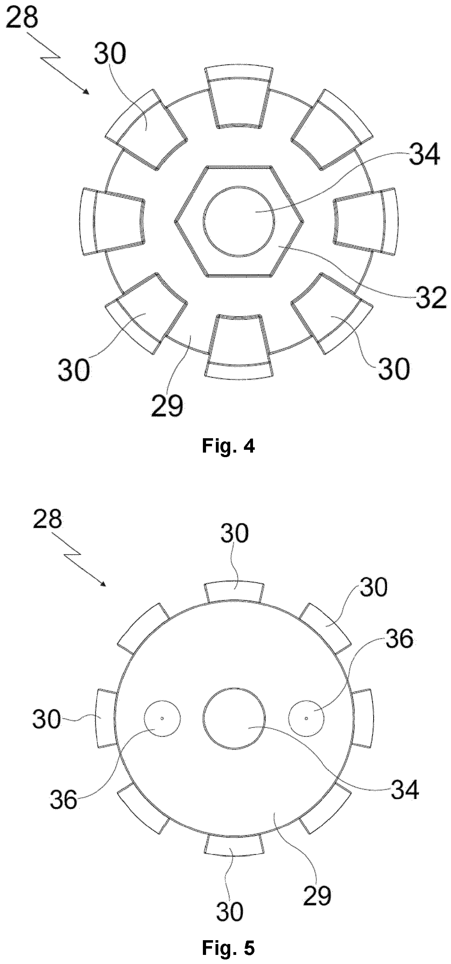

Die Figuren 4 bis 6 zeigen das Sicherungsmittel 28 ohne den Verschlussstopfen 10. Fig. 4 zeigt das Sicherungsmittel 28 von der im montierten Zustand von der Hülse 12 abgewandten Seite her. Hier ist deutlich die Ausnehmung 32 zur Aufnahme der Mutter 20 und der Druckplattendurchbruch 34, durch den der Bolzen 14 hindurchzuführen ist, zu sehen.

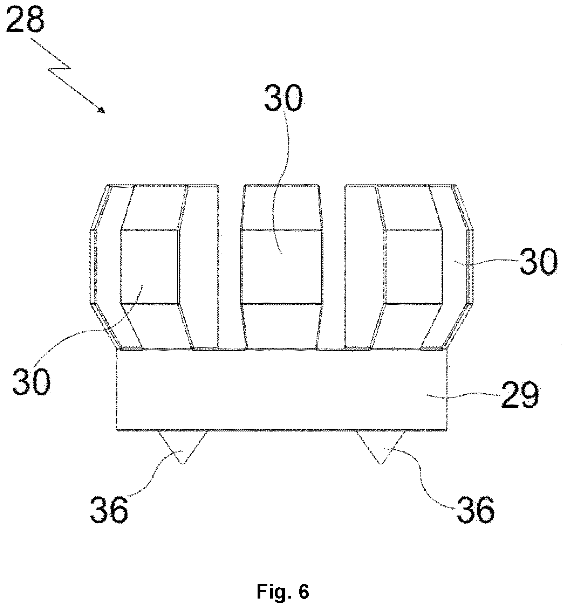

Eine Aufsicht von der der Hülse 12 zugewandten Seite ist in Fig. 5 dargestellt. Darin ist ebenfalls der Druckplattendurchbruch 34 zu sehen. Weiterhin sind zwei Vorsprünge 36 gezeigt, welche auch in der in Fig. 6 dargestellten Seitenansicht deutlich zu erkennen sind. Die Vorsprünge 36 drücken sich beim Anziehen des Bolzens 14 über den Innensechskant 24 im Bolzenkopf 22 in die Hülse 12 und verhindern dadurch ein Verdrehen der Hülse 12 gegenüber dem Sicherungsmittel 28. Dadurch wird vermieden, dass die Hülse 12 an der Wandung des abzudichtenden Durchbruchs oder der abzudichtenden Öffnung durch Verdrehen aufgerieben wird.

Bei der Verwendung des Verschlussstopfens 10 wird dieser mit dem Sicherungsmittel 28 voran in einen Durchbruch oder eine Öffnung eines Betonbauteils hineingeschoben, so dass das Sicherungsmittel 28 sich über die Klemmmittel 30, welche jeweils federnd mit der Druckplatte 29 des Sicherungsmittels 28 verbunden sind, im Durchbruch oder der Öffnung festklemmt. Sodann kann der Bolzenkopf 22 mittels eines in den Innensechskant 24 eingreifenden Schraubwerkzeugs in Verbindung mit der Mutter 20 und dem Schraubgewinde 16 so angezogen werden, dass dadurch die Hülse 12 zusammengedrückt wird. Durch die vorgegebene Länge des Schraubgewindes 16 ist die Strecke, um die die Hülse 12 zusammengedrückt wird, definiert. Durch das Zusammendrücken presst sich die Hülse 12 an die Innenwand des Durchbruchs bzw. der Öffnung und gleichzeitig gegen den Bolzen 14, so dass dadurch eine wasserdichte Abdichtung erfolgt.

### Bezugszeichenliste

- 10: Verschlussstopfen
- 12: Hülse
- 14: Bolzen
- 16: Schraubgewinde
- 18: erstes Hülsenende
- 19: zweites Hülsenende
- 20: Mutter
- 22: Bolzenkopf
- 24: Innensechskant
- 26: Druckscheibe
- 28: Sicherungsmittel
- 29: Druckplatte
- 30: Klemmmittel
- 32: Ausnehmung
- 34: Druckplattendurchbruch
- 36: Vorsprung

## Patentansprüche

1. Verschlussstopfen (10) oder Anker zum wasserdichten Verschließen eines Durchbruchs oder einer Öffnung in einem Betonbauteil, umfassend eine elastische Hülse (12) mit einem ersten Hülsenende (18) und einem zweiten Hülsenende (19), einen sich durch die Hülse (12) hindurch erstreckenden Bolzen (14) mit einem Schraubgewinde (16) mit darauf aufgeschraubter Mutter (20) an seinem einen Ende und einem Bolzenkopf (22) oder einem weiteren Schraubgewinde mit darauf aufgeschraubter weiteren Mutter an seinem anderen Ende, wobei zwischen der Mutter (20) und der Hülse (12) oder zwischen dem Bolzenkopf (22) oder der weiteren Mutter und der Hülse (12) ein Sicherungsmittel (28) vorgesehen ist, wobei das Sicherungsmittel (28) eine Druckplatte (29) und eine Druckplattendurchbruch (34), durch den sich der Bolzen (14) erstreckt, aufweist und sich über diese Druckplatte (29) am ersten Hülsenende (18) oder am zweiten Hülsenende (19) aufstützt, oder wobei die Mutter (20) oder der Bolzenkopf (22) oder die weitere Mutter als sich am ersten Hülsenende (18) oder am zweiten Hülsenende (19) aufstützendes Sicherungsmittel (28) ausgebildet ist, wobei sich am jeweils anderen der Hülsenenden (18, 19) der dort angeordnete Bolzenkopf (22) oder die dort angeordnete Mutter (20) oder weitere Mutter direkt oder über eine zwischen diesem Bolzenkopf (22) oder dieser Mutter (20) oder dieser weiteren Mutter und der Hülse (12) angeordnete Druckscheibe (26) an diesem anderen der Hülsenenden (18,19) aufstützt, wobei das Sicherungsmittel (28) zumindest zwei federnd mit der Druckplatte (29) verbundene Klemmmittel (30) aufweist oder, wenn die Mutter (20) oder der Bolzenkopf (22) oder die weitere Mutter selbst als Sicherungsmittel (28) ausgebildet ist, zumindest zwei federnd mit der Mutter (20), dem Bolzenkopf (22) oder der weiteren Mutter verbundene Klemmmittel (30) aufweist, wobei die Klemmmittel (30) über eine gedanklich in Richtung des Sicherungsmittels und über das Sicherungsmittel hinaus verlängerte Außenfläche der Hülse (12) jeweils seitlich herausragen, um das Sicherungsmittel (28) in dem Durchbruch oder der Öffnung gegen ein Verdrehen gegenüber dem Betonbauteil zu sichern und wobei das zwischen der Mutter (20) oder dem Bolzenkopf (22) oder der weiteren Mutter und der Hülse (12) angeordnete Sicherungsmittel (28) gegenüber dieser Mutter (20) oder diesem Bolzenkopf (22) oder dieser weiteren Mutter gegen ein Verdrehen gesichert ist.

2. Verschlussstopfen (10) oder Anker nach Anspruch 1, wobei sich das Schraubgewinde (16) und/oder das weitere Schraubgewinde nur über eine vordefinierte Länge des Bolzens (14) erstreckt/erstrecken, so dass die Hülse (12) bei bis zum Ende des Schraubgewindes (16) eingeschraubter Mutter (20) und/oder bis zum Ende des weiteren Schraubgewindes eingeschraubter weiteren Mutter um eine vordefinierte Strecke zusammendrückt wird.

3. Verschlussstopfen (10) oder Anker nach Anspruch 1 oder 2, wobei die Mutter (20) oder der Bolzenkopf (22) oder die weitere Mutter gegenüber dem Sicherungsmittel (28) dadurch gegen ein Verdrehen gesichert ist, dass die Mutter (20) oder der Bolzenkopf (22) oder die weitere Mutter mit dem Sicherungsmittel (28) verklebt ist oder dass in dem Sicherungsmittel (28) eine Ausnehmung (32) zur formschlüssigen oder passgenauen reibschlüssigen Aufnahme der Mutter (20) oder des Bolzenkopfs (22) oder die weitere Mutter vorgesehen ist.

4. Verschlussstopfen (10) oder Anker nach einem der vorhergehenden Ansprüche, wobei in einer dem Bolzen (14) zugewandten inneren Wandung der Hülse (12) ein umlaufender Wulst ausgebildet ist, der an der Stelle des Wulstes einen Spalt zwischen dem Bolzen (14) und der Hülse (12) verringert.

5. Verschlussstopfen (10) oder Anker nach einem der vorhergehenden Ansprüche, wobei die Klemmmittel (30) achssymmetrisch um eine Längsachse des Bolzens (14) angeordnet sind.

6. Verschlussstopfen (10) oder Anker nach einem der vorhergehenden Ansprüche, wobei mindestens drei der Klemmmittel (30) achssymmetrisch um die Längsachse des Bolzens (14) angeordnet sind.

7. Verschlussstopfen (10) oder Anker nach einem der vorhergehenden Ansprüche, wobei das Sicherungsmittel (28) auf seiner der Hülse (12) zugewandten Seite mindestens einen Vorsprung (36) aufweist, um ein Verdrehen der Hülse (12) gegenüber dem Sicherungsmittel (28) zu verhindern oder zumindest zu erschweren, wenn die Hülse (12) und das Sicherungsmittel (28) aufeinandergedrückt werden.

8. Verschlussstopfen (10) oder Anker nach einem der vorhergehenden Ansprüche, wobei der Bolzenkopf (22), wenn er am anderen der Hülsenenden (18, 19) angeordnet ist, so ausgebildet ist, dass er mittels eines Schraubwerkzeugs verdreht werden kann.

9. Verschlussstopfen (10) oder Anker nach einem der vorhergehenden Ansprüche, wobei der Bolzen (14) auf seiner am anderen der Hülsenenden (18, 19) gelegenen Seite ein Innengewinde aufweist.

10. Verschlussstopfen (10) oder Anker nach Anspruch 9, wobei sich das Innengewinde durch den Bolzenkopf (22) hindurch erstreckt.

11. Verwendung eines Verschlussstopfens (10) oder Ankers nach einem der vorhergehenden Ansprüche zum wasserdichten Verschließen eines Durchbruchs oder einer Öffnung in einem Betonbauteil.

12. Verfahren zum wasserdichten Verschließen eines Durchbruchs oder einer Öffnung in einem Betonbauteil mit folgenden Schritten:
a) Hineinschieben eines Verschlussstopfens (10) oder Ankers nach einem der vorhergehenden Ansprüche in den Durchbruch oder die Öffnung, wobei das Hineinschieben mit dem Sicherungsmittel (28) voran erfolgt und
b) Anziehen des Bolzenkopfes (22) oder der Mutter (20) oder der weiteren Mutter (20), welcher/welche auf der dem Sicherungsmittel (28) gegenüberliegenden Seite der Hülse (12) angeordnet ist, wobei die Hülse (12) so weit zusammengedrückt wird, dass sie dicht an einer Wand des Durchbruchs oder der Öffnung anliegt.

13. Verfahren nach Anspruch 12, wobei sich das Schraubgewinde (16) oder das weitere Schraubgewinde nur über eine vordefinierte Länge des Bolzens (14) erstreckt, so dass die Hülse (12) bei bis zum Ende des Schraubgewindes (16) eingeschraubter Mutter (20) und/oder bis zum Ende des weiteren Schraubgewindes eingeschraubter weiteren Mutter um eine vordefinierte Strecke zusammendrückt wird, wobei der Bolzenkopf (22) oder die weitere Mutter und/oder die Mutter (20) so weit angezogen wird/werden, bis die Mutter (20) das Ende des Schraubgewindes (16) und/ oder die weitere Mutter das Ende des weiteren Schraubgewindes erreicht.
